# EUROPÄISCHE PATENTSCHRIFT

(11) **EP 1 617 176 B1**
(45) Veröffentlichungstag und Bekanntmachung des Hinweises auf die Patenterteilung: **30.12.2009**
(21) Anmeldenummer: 05013824.7
(22) Anmeldetag: 27.06.2005
(51) Int. Cl.: G01C 9/06, G01C 9/20

(54) **Neigungssensor**
Inclination sensor
Capteur d'inclinaison

(30) Priorität: 12.07.2004 DE 202004010922 U
(43) Veröffentlichungstag der Anmeldung: 18.01.2006
(73) Patentinhaber: Leica Geosystems AG, 9435 Heerbrugg (CH)
(72) Erfinder: Lippuner, Heinz, 9445 Rebstein (CH)
(74) Vertreter: Kaminski, Susanne

(56) Entgegenhaltungen:
- EP-A- 0 507 102
- DE-A1- 19 621 189
- US-A- 6 088 090

## Beschreibung

Die Erfindung betrifft einen Neigungssensor nach dem Oberbegriff des Anspruchs 1.

Derartige Neigungs- und gegebenenfalls Winkelsensoren werden zum Beispiel in der Vermessungstechnik zur Horizontierung geodätischer Messinstrumente eingesetzt. Die EP 0 507 102 B1 beschreibt einen Neigungsmesser bei dem die Lichtquelle und Musterträger als zwei separate Bauteile vorliegen und zueinander beabstandet angeordnet sind. Als neigungsempfindliche Einheit ist ein Flüssigkeitsprisma vorgesehen, welches in an sich bekannter Weise abhängig vom Winkel unter dem ein Lichtstrahl auf die Flüssigkeitsoberfläche auftrifft, eine Ablenkung des Lichtstrahls bewirkt. Das Muster ist fischgrätenartig ausgebildet und besteht aus parallel zueinander angeordneten V-förmigen Winkeln, die optional entweder von gleicher oder unterschiedlicher Strichstärke sein können. Nachteilig bei dieser Anordnung ist, dass das getrennte Vorhandensein von Lichtquelle und Musterträger einen erhöhten materiellen und konstruktiven Aufwand nach sich zieht und einen erhöhten Platzbedarf erfordert. Aufgabe der Erfindung ist es daher, Mängel des Standes der Technik zu beheben und einen Neigungs- und Winkelsensor von kompakter Bauweise bereitzustellen, bei dem die Lichtquelle mit einem Muster versehen ist und somit gleichzeitig als Musterträger dient. Diese Aufgabe wird durch eine Vorrichtung mit den kennzeichnenden Merkmalen des Anspruchs 1 gelöst. Als Lichtquelle kommen insbesondere lichtemittierende Dioden oder andere Lichterzeuger - flächenförmige - in Frage, die elektromagnetische Strahlung aus elektrischem Strom erzeugen und nicht nach dem Halbleiterprinzip arbeiten, wie zum Beispiel Glühlampen, Leuchtstofflampen oder dergleichen. Ein Vorteil der Erfindung liegt darin, dass im Vergleich zu den bisherigen Neigungsmessern wenigstens ein Bauteil weniger benötigt wird, was die Herstellungskosten senkt und eine verkürzte Bauweise ermöglicht. Ein weiterer Vorteil ergibt sich aus dem Entfallen der bei den bisherigen Neigungsmessern im Allgemeinen erforderlichen Kollimierung des Lichtstrahlbündels vor dem Auftreffen auf das Muster.

Nachstehend werden Ausführungsbeispiele der Erfindung anhand der Zeichnungen rein beispielhaft näher erläutert. Es zeigen in schematischer Darstellung:
- Figur 1: eine Messanordnung mit Flüssigkeitsprisma im Durchlicht,
- Figur 2: ein Beispiel eines Musters auf der LED-Oberfläche,
- Figur 3: ein zweites Beispiel eines Muster auf der LED-Oberfläche, und
- Figur 4: eine Messanordnung mit Flüssigkeitsprisma und Totalreflexion am Flüssigkeitshorizont.

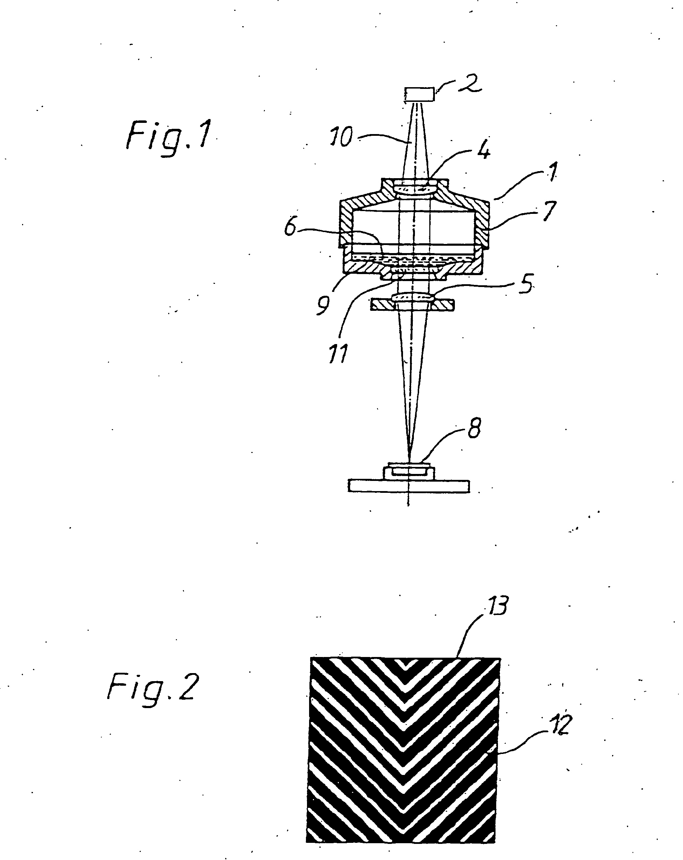

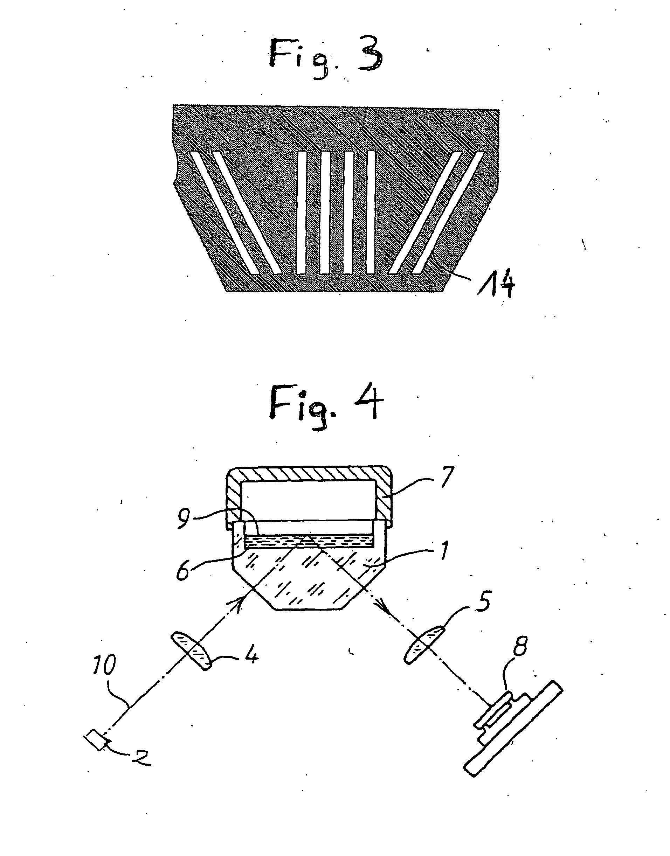

Anhand von Figur 1 und Figur 4 wird die Erfindung rein beispielhaft für Neigungssensoren dargestellt, ist jedoch - wie dem Fachmann offensichtlich - in adäquater Weise auch für Winkelsensoren relevant. Figur 1 zeigt eine Anordnung für einen Neigungsmesser, die als Quelle 2 optischer Strahlung eine lichtemittierende Diode (LED) umfasst, deren Oberfläche mit einem Muster versehen ist. Das von der LED erzeugte Licht durchtritt das Muster und das Flüssigkeitsprisma 1, bevor es auf das Lineararray 8 auftrifft, wo ein Abbild des Musters entsteht. Das herkömmliche Flüssigkeitsprisma 1 besteht zunächst aus einem Behälter 7, in dem sich eine Flüssigkeit 6 befindet, bei der es sich vorzugsweise um Siliconöl handelt. Das Licht tritt über eine das Strahlenbündel parallelisierende obere Linse 4 in das Innere des Behälters 7, durchquert die Flüssigkeit 6 und gelangt durch eine transparente, den Behälter 7 verschliessende Abschlussplatte 11 wieder nach aussen. Danach wird der Lichtstrahl durch eine untere Linse 5 fokussiert und trifft auf dem im Abstand der Brennweite der Linse 5 von letzterer entferntem Lineararray 8 auf.

Die Indikation der Neigung macht sich das Phänomen der Brechung zunutze, wonach die Lichtstrahlablenkung sowie die daraus resultierende Verschiebung des Musters relativ zum Lineararray 8 vom Winkel abhängt, den Lichtstrahl und Einfallsebene - also Flüssigkeitshorizont 9 - zwischen sich einschliessen.

Figur 2 veranschaulicht ein auf die Oberfläche der lichtemittierenden Diode (LED) aufgebrachtes Muster, das aus V-förmigen, parallel zueinander beabstandeten Winkeln 13 von unterschiedlicher Strichstärke besteht, so dass sich eine Fischgrätenstruktur 12 ergibt.

Figur 3 stellt ein weiteres Beispiel für ein aus linearen Strichen 14 gebildetes Muster auf der LED dar. Das Muster enthält eine zentral angeordnete Gruppierung von vier parallel im Abstand zueinander angeordneten Strichen 14, die beidseits von jeweils einem Paar paralleler Striche 14 flankiert wird. Die seitlich angeordneten Strichpaare laufen in einer Richtung aufeinander zu, so dass sich eine in dieser Richtung verjüngende Aussenkontur für das Muster ergibt.

Die Figur 4 zeigt ein Ausführungsbeispiel mit einem kombinierten Glas-Flüssigkeitsprisma 1. Der Lichtstrahl 10 erfährt am Flüssigkeitshorizont 9 eine Ablenkung durch Totalreflexion, die vom Winkel abhängt, den Lichtstrahl 10 und Flüssigkeitshorizont 9 miteinander bilden. Eine Verstärkung der Ablenkung resultiert daraus, dass sich bei der Totalreflexion eine Änderung des Einfallswinkels, wie es bei einer Neigung des Flüssigkeitshorizonts 9 relativ zum Lichtstrahl der Fall ist, ein Ablenkungswinkel vom doppelten Betrag des Einfallswinkels ergibt.

Die in den Figuren 2 und 3 dargestellten Muster sind rein beispielhaft, die Musterstruktur kann in beliebiger Weise gestaltet sein und auf die Oberfläche der Lichtquelle auf unterschiedliche Weise appliziert sein, wie aufgedruckt, aufgeätzt, aufgedampft, usw.

## Patentansprüche

1. Neigungssensor mit einer Quelle (2) optischer Strahlung, einem Musterträger mit
- einem optisch wirksamen Muster zum Durchtritt der von der Quelle (2) erzeugten optischen Strahlung (2), welches Muster eine Musterstruktur aufweist und so ausgebildet ist, dass eine zweidimensionale Neigungs-Messung ermöglicht wird,
- einer dem Musterträger in Ausbreitungsrichtung der Strahlung nachgeschalteten neigungsempfindlichen Einheit (1) und
- einer Projektionsfläche (8) in Form eines Lineararrays zum Auftreffen der von der Quelle (2) erzeugten, den Musterträger und die neigungsempfindliche Einheit (1) passierenden Strahlung, **dadurch gekennzeichnet, dass** das Muster auf der Oberfläche der Quelle (2) appliziert und die Quelle (2) als Musterträger ausgebildet ist.

2. Neigungssensor nach Anspruch 1, **dadurch gekennzeichnet, dass** die Quelle (2) eine lichtemittierende Diode (LED) ist.

3. Neigungssensor nach einem der vorhergehenden Ansprüche, **dadurch gekennzeichnet, dass** das Muster auf der Quelle (2) in einer der folgenden Arten appliziert ist:
- aufgedruckt,
- aufgeätzt,
- aufgedampft,
- eingeritzt.

4. Neigungssensor nach einem der vorhergehenden Ansprüche, **dadurch gekennzeichnet, dass** das Muster transmissiv oder diffraktiv wirkend ausgebildet ist.

## Claims

1. Inclination sensor having a source (2) of optical radiation, a pattern carrier comprising
- an optically active pattern for the passage of the optical radiation (2) produced by the source (2), which pattern has a pattern structure and is formed so that a two-dimensional inclination measurement is permitted,
- an inclination-sensitive unit (1) downstream of the pattern carrier in the direction of propagation of the radiation and
- a projection surface (8) in the form of a line array for incidence of the radiation produced by the source (2) and passing through the pattern carrier and the inclination-sensitive unit (1),
**characterized in that** the pattern is applied to the surface of the source (2) and the source (2) is in the form of a pattern carrier.

2. Inclination sensor according to Claim 1,
**characterized in that** the source (2) is a light-emitting diode (LED).

3. Inclination sensor according to either of the preceding claims, **characterized in that** the pattern is applied to the source (2) by one of the following methods:
- printed on,
- applied by etching,
- applied by vapour deposition,
- scored.

4. Inclination sensor according to any of the preceding claims, **characterized in that** the pattern is formed so as to have a transmitting or diffracting effect.

## Revendications

1. Capteur d'inclinaison, avec une source (2) de rayonnement optique, un support de motif, comprenant :
- un motif optiquement actif, pour le passage du rayonnement (2) optique généré par la source (2), ledit motif présentant une structure de motif et étant réalisé de manière qu'une mesure d'inclinaison bidimensionnelle soit possible,
- une unité (1) sensible à l'inclinaison, branchée en aval du support de motif, dans le sens de propagation du rayonnement, et
- une surface de projection (8), se présentant sous la forme d'une matrice de lignes devant recevoir l'impact du rayonnement généré par la source (2), passant par le support de motif et l'unité (1) sensible à l'inclinaison, **caractérisé en ce que** le motif est appliqué sur la surface de la source (2) et que la source (2) est réalisée sous forme de support de motif.

2. Capteur d'inclinaison selon la revendication 1,
**caractérisé en ce que** la source (2) est une diode électroluminescente (LED).

3. Capteur d'inclinaison selon l'une des revendications précédentes, **caractérisé en ce que** le motif est appliqué sur la source (2) selon l'une des manières suivantes :
- impression,
- gravure,
- métallisation par évaporation,
- entaillage.

4. Capteur d'inclinaison selon l'une des revendications précédentes, **caractérisé en ce que** le motif est réalisé en présentant un effet transmissif ou diffractif.
